# DEMANDE DE BREVET EUROPEEN

(11) **EP 4 183 472 A1**
(43) Date de publication de la demande: **24.05.2023**
(21) Numéro de dépôt: 22207601.0
(22) Date de dépôt: 15.11.2022
(51) Int. Cl.: B01D 53/047

(54) **PROCÉDÉ DE RÉGLAGE D'UNE UNITÉ DE SÉPARATION D'UN FLUX GAZEUX**

(30) Priorité: 22.11.2021 FR 2112320
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: PEREZ, Maxime, 94503 Champigny sur Marne (FR); RODRIGUES, Guillaume, 94503 Champigny sur Marne (FR); MONEREAU, Christian, 94503 Champigny sur Marne (FR); PUSIOL, Stéphane, 75007 Paris (FR); PETIT, Pierre, 94503 Champigny sur Marne (FR)
(74) Mandataire: Air Liquide

(57) **Abrégé**

L'invention concerne un procédé de réglage d'une unité de séparation d'un flux gazeux comportant P adsorbeurs, avec P ≥ 2, chacun suivant un cycle d'adsorption de type PSA avec un décalage d'un temps de phase, l'unité comportant un dispositif de commande permettant à l'unité de fournir un débit requis et de fonctionner sélectivement selon un cycle nominal ou selon un cycle réduit, le cycle nominal comportant successivement, au moins une première étape et une deuxième étape, le cycle réduit, suivant la même succession d'étapes que le cycle nominal, avec insertion d'une étape intermédiaire entre la première étape et la deuxième étape, l'étape intermédiaire étant distincte d'un temps mort et étant distincte d'un allongement de la première étape ou d'un allongement de la deuxième étape, le procédé comportant les étapes de :
- faire fonctionner l'unité selon le cycle nominal lorsque le débit requis est égal à un débit nominal ou éventuellement lorsque le débit requis est supérieur au débit nominal,
- faire fonctionner l'unité selon le cycle réduit lorsque le débit requis est inférieur ou égal à un débit prédéterminé, le débit prédéterminé étant inférieur au débit nominal.

## Description

La présente invention est relative à un procédé de réglage d'une unité de séparation d'un flux gazeux, l'unité étant de type PSA (pour « Pressure Swing Adsorption », c'est-à-dire adsorption à modulation de pression) et plus particulièrement de type VPSA, c'est-à-dire mettant en œuvre des moyens de pompage sous vide. Elle peut s'appliquer dès lors que le débit de production requis est inférieur au débit nominal qui a servi à son dimensionnement.

Dans les procédés de type PSA, l'adsorbant en fin de phase de production est régénéré par la désorption des impuretés obtenue au moyen d'une baisse de leur pression partielle. Cette baisse de pression peut être obtenue par une baisse de la pression totale et/ou par balayage avec un gaz exempt ou contenant peu d'impuretés.

Les procédés par adsorption modulée en pression sont utilisés aussi bien pour éliminer des traces d'impuretés, par exemple de teneur inférieure à un pourcent dans le gaz d'alimentation, que pour séparer des mélanges contenant des dizaines de pourcents de différents gaz. Dans le premier cas, on parle généralement d'épuration (par exemple un séchage de gaz) et de séparation dans le second cas (par exemple une production d'oxygène ou d'azote à partir d'air atmosphérique).

De manière générale, un procédé par adsorption en phase gazeuse permet de séparer une ou plusieurs molécules d'un mélange gazeux les contenant, en exploitant la différence d'affinité d'un ou plusieurs adsorbants pour les différentes molécules constitutives du mélange. L'affinité d'un adsorbant pour une molécule dépend d'une part de la structure et la composition de l'adsorbant et d'autre part des propriétés de la molécule, en particulier sa taille, sa structure électronique et ses moments multipolaires. Un adsorbant peut être par exemple une zéolite, un charbon actif, une alumine activée éventuellement dopée, un gel de silice, un tamis moléculaire carboné, une structure métallo-organique, un oxyde ou hydroxyde de métaux alcalins ou alcalino-terreux, ou une structure poreuse contenant de préférence une substance capable de réagir réversiblement avec les molécules, substance telle que amines, solvants physique, complexants métalliques, oxydes ou hydroxydes métalliques par exemple. Les matériaux adsorbants les plus classiques sont sous forme de particules (billes, bâtonnets, concassés...) mais existent également sous forme structurée tels les monolithes, roues, contacteurs à passages parallèle, tissus, fibres...

On peut distinguer 3 grandes familles de procédé par adsorption : les procédés à charge perdue, les procédés à modulation de température appelés TSA (Température Swing Adsorption) et enfin les procédés PSA (Pressure Swing Adsorption).

Dans les procédés à charge perdue, on met en place une nouvelle charge lorsque celle en cours d'utilisation est saturée par les impuretés ou plus généralement quand elle ne peut plus jouer son rôle de protection de manière suffisante.

Dans les procédés de type TSA, l'adsorbant en fin d'utilisation est régénéré in situ, c'est-à-dire que les impuretés arrêtées sont évacuées afin que le dit adsorbant récupère l'essentiel de ses capacités d'adsorption et puisse recommencer un cycle d'épuration, l'effet de régénération essentiel étant dû à une élévation de température.

Enfin, dans les procédés de type PSA, l'adsorbant en fin de phase de production est régénéré par la désorption des impuretés obtenue au moyen d'une baisse de leur pression partielle. Cette baisse de pression peut être obtenue par une baisse de la pression totale et/ ou par balayage avec un gaz exempt ou contenant peu d'impuretés.

Les procédés par adsorption modulée en pression sont utilisés aussi bien pour éliminer des traces d'impuretés, par exemple de teneur inférieure à un pourcent dans le gaz d'alimentation, que pour séparer des mélanges contenant des dizaines de pourcents de différents gaz. Dans le premier cas, on parle généralement d'épuration (par exemple un séchage de gaz) et de séparation dans le second cas (par exemple une production d'oxygène ou d'azote à partir d'air atmosphérique).

Dans le cadre de la présente invention, on désigne par le terme PSA, tout procédé d'épuration ou de séparation de gaz mettant en œuvre une variation cyclique de la pression que voit l'adsorbant entre une pression haute, dite pression d'adsorption, et une pression basse, dite pression de régénération. Ainsi, cette appellation générique de PSA est employée indifféremment pour désigner les procédés cycliques suivants, auxquels il est aussi courant de donner des noms plus spécifiques en fonction des niveaux de pression mis en jeu ou du temps nécessaire à un adsorbeur pour revenir à son point initial (temps de cycle) :
- les procédés VSA dans lesquels l'adsorption s'effectue sensiblement à la pression atmosphérique, préférentiellement entre 0.95 et 1.25 bar abs et la pression de désorption est inférieure à la pression atmosphérique, typiquement de 50 à 400 mbar abs ;
- les procédés MPSA ou VPSA dans lesquels l'adsorption s'effectue à une pression haute supérieure à la pression atmosphérique, typiquement entre 1.5 et 6 bar abs, et la désorption à une pression basse inférieure à la pression atmosphérique, généralement comprise entre 200 et 600 mbar abs ;
- les procédés PSA proprement dits dans lesquels la pression haute est sensiblement supérieure à la pression atmosphérique, typiquement entre 3 et 50 bar abs et la pression basse sensiblement égale ou supérieure à la pression atmosphérique, généralement entre 1 et 9 bar abs ;
- les procédés RPSA (Rapid PSA) pour lesquels la durée du cycle de pression est typiquement inférieure à la minute ;
- les procédés URPSA (Ultra Rapid PSA) pour lesquels la durée du cycle de pression est de l'ordre de quelques secondes maximum.

Il convient de noter que ces diverses appellations ne sont pas standardisées et que les limites sont sujettes à variation.

On rappelle que sauf avis contraire, l'utilisation du terme PSA recouvre ici toutes ces variantes, « PSA » étant pris alors au sens le plus général. Néanmoins, dans certains cas, on peut être amené à préciser plus particulièrement qu'il s'agit d'un VSA, d'un VPSA, en particulier s'il est question de pompage sous vide.

Un adsorbeur va donc commencer une période d'adsorption jusqu'à ce qu'il soit chargé dans le ou les constituants à arrêter à la pression haute puis va être régénéré par dépressurisation et extraction des composés adsorbés avant d'être remis en état pour recommencer une nouvelle période d'adsorption. L'adsorbeur a alors effectué un cycle de pression et le principe même du procédé PSA est d'enchaîner ces cycles les uns après les autres ; il s'agit donc d'un procédé cyclique. Le temps que met un adsorbeur pour revenir dans son état initial est appelé temps de cycle. Par principe, chaque adsorbeur suit le même cycle avec un décalage temporel qu'on appelle temps de phase ou plus simplement phase. On a donc la relation : temps de phase = temps de cycle / nombre d'adsorbeurs. On voit que le nombre de phases est égal au nombre d'adsorbeurs.

Ce cycle comporte généralement des périodes parmi :
- Production ou Adsorption au cours de laquelle le gaz d'alimentation est introduit par une des extrémités de l'adsorbeur, les composés les plus adsorbables sont adsorbés préférentiellement et le gaz enrichi en composés les moins adsorbables (gaz produit) est extrait par la seconde extrémité. L'adsorption peut se faire à pression montante, à pression sensiblement constante, voire à pression légèrement descendante ;
- Dépressurisation au cours de laquelle l'adsorbeur qui n'est plus alimenté en gaz d'alimentation est évacué par au moins une de ses extrémités d'une partie des composés contenus dans l'adsorbant et les volumes libres. En prenant comme référence le sens de circulation du fluide en période d'adsorption, on peut définir des dépressurisations à co-courant, à contre-courant ou simultanément à co-courant et contre-courant ;

- Elution ou Purge, au cours de laquelle un gaz enrichi en les constituants les moins adsorbables (gaz de purge) circule à travers le lit d'adsorbant afin d'aider à la désorption des composés les plus adsorbables. La Purge se fait généralement à contre-courant ;
- Repressurisation au cours de laquelle l'adsorbeur est au moins partiellement repressurisé avant de reprendre une période d'Adsorption. La repressurisation peut se faire à contre-courant et/ou à co-courant ;
- Temps mort au cours de laquelle l'adsorbeur reste dans le même état. Ces temps morts peuvent faire partie intégrante du cycle au titre d'une étape à part entière, permettant par exemple la synchronisation d'étapes entre adsorbeurs ou seulement correspondre à la fin d'une étape qui s'est terminée avant le temps imparti (dans ce cas, on parle aussi de période d'attente). Les vannes peuvent être fermées ou bien rester en l'état, selon les caractéristiques du cycle.

On rappelle que le terme « à co-courant » se dit d'un flux qui va dans le même sens que le gaz d'alimentation lorsqu'il traverse l'adsorbeur et que le terme « à contre-courant » se dit d'un flux qui va dans le sens contraire.

On rappelle qu'une phase peut comprendre plusieurs étapes distinctes et inversement qu'une étape peut se dérouler sur plus d'une phase (on peut alors dire que l'étape est constituée par plusieurs sous étapes appartenant à des phases successives).

On rappelle également qu'une étape est caractérisée par les flux entrant et/ou sortant de l'adsorbeur, leurs origines et leurs destinations. Ainsi, la dépressurisation d'un adsorbeur avec des périodes successives correspondant à un premier équilibrage (le gaz allant repressuriser un premier adsorbeur), à un deuxième équilibrage (le gaz allant repressuriser un second adsorbeur) et à la production de gaz d'élution, comporte 3 étapes distinctes bien qu'il s'agit de dépressurisation à co-courant dans les 3 cas.

De même, par exemple, une période d'élution pendant laquelle l'adsorbeur en basse pression est balayé par un gaz issu successivement de deux étapes différentes comporte elle-même deux étapes distinctes.

De façon générale, une unité de séparation de gaz par adsorption selon un procédé de type PSA est dimensionnée sur un cahier des charges comportant en particulier le débit de production à assurer (débit nominal ou débit à 100%) et la pureté requise associée.

Un problème qui se pose est d'envisager une solution pour assurer le meilleurfonctionnement possible dès lors que le débit de production effectivement requis est inférieur au débit nominal. C'est par exemple le cas lorsqu'une marge a été prise lors de la conception de l'unité ou encore lorsque la demande est moindre par période pour des raisons propres au site sur laquelle l'unité PSA a été implantée (maintenance, marches différentes d'unités aval, consommation réduite...).

Chaque procédé PSA peut avoir sa propre solution mais très souvent le principe retenu consiste à la fois à diminuer le débit de gaz d'alimentation et à allonger le temps de phase et par là le temps de cycle. On peut ainsi faire en sorte que l'adsorbant voit passer la même quantité de gaz en marche réduite (c'est-à-dire dans le cycle réduit) qu'en marche nominale (c'est-à-dire dans le cycle nominal) et conserver ainsi les mêmes performances. L'allongement du temps de phase s'effectue en augmentant la durée d'au moins une des étapes constitutives de chaque phase. C'est une méthode particulièrement simple, très largement utilisée dans les PSA H2 et bien documentée dans la littérature. A partir de la mesure du débit requis, le dispositif de commande des PSA H2 les plus récents gère automatiquement les marches réduites et permet de conserver le rendement d'extraction en hydrogène de l'unité dans une très large plage de débit.

Lorsqu'il y a des machines associées à l'unité (compresseur, pompe à vide), il convient d'avoir un moyen de limiter les quantités de gaz introduite ou soutirée pendant des durées à priori plus longues à cause du nouveau cycle mis en œuvre.

Deux moyens au moins peuvent être utilisés à cette fin. Le plus luxueux consiste à utiliser des machines à vitesse variable. Il suffit alors d'adapter la vitesse à la nouvelle durée d'étape. Cette solution a deux inconvénients : un investissement plus élevé, une consommation énergétique accrue en marche normale du fait du rendement du variateur de vitesse à intégrer dans le bilan.

On peut aussi introduire une durée de « bipasse » pendant laquelle la machine « tourne sur elle-même » sans envoyer un flux gazeux vers les adsorbeurs et/ou sans aspirer un flux d'un adsorbeur et ceci avec une consommation énergétique minime. Cette solution est couramment utilisée sur les unités de type VSA ou VPSA. On pourra se référer à EP 988 883 par exemple.

D'autres solutions ont été décrites qui font varier les pressions du cycle (voir par exemple EP 689 862 et EP 923 977) et qui de ce fait ne sont pas systématiquement utilisables.

On retiendra qu'en particulier lorsque l'unité intègre des machines, la solution de base en marche réduite est de rajouter des temps morts aux cours desquels on isole les adsorbeurs et durant lesquels les machines tournent sur leur « bipasse » ou bien aspirent et/ou refoulent par exemple à pression atmosphérique.

Satisfaisante très longtemps, cette solution trouve ses limites avec la tendance actuelle d'accélérer les cycles afin de diminuer le volume d'adsorbant nécessaire pour effectuer la séparation. En effet, ajouter un temps mort pour isoler un certain temps un adsorbeur conduit à fermer et ouvrir des vannes. Or ce sont ces manœuvres pour fermer de façon étanche puis pour ouvrir à nouveau les vannes qui usent les parties les plus sensibles de la robinetterie, en particulier les joints et de façon générale les pièces d'usure, alors que les simples mouvements liés à la régulation d'un point de consigne sont pour leur part, sans effet notables.

Partant de ces constatations, un problème qui se pose est de permettre l'ajustement de la production d'une unité de séparation de gaz par adsorption de type PSA qui, en marche réduite, ne nécessite pas d'ouvrir et fermer, phase après phase, une vanne en vue de l'introduction de temps morts pour isoler les adsorbeurs.

La présente invention vise à remédier efficacement à ces inconvénients en proposant un procédé de réglage d'une unité de séparation d'un flux gazeux comportant P adsorbeurs, avec P ≥ 2, chacun suivant un cycle d'adsorption de type PSA avec un décalage d'un temps de phase, l'unité comportant un dispositif de commande permettant à l'unité de fournir un débit requis et de fonctionner sélectivement selon un cycle nominal ou selon un cycle réduit, le cycle nominal comportant successivement, au moins une première étape et une deuxième étape, le cycle réduit, suivant la même succession d'étapes que le cycle nominal, avec insertion d'une étape intermédiaire entre la première étape et la deuxième étape, l'étape intermédiaire étant distincte d'un temps mort et étant distincte d'un allongement de la première étape ou d'un allongement de la deuxième étape, le procédé comportant les étapes de :
- faire fonctionner l'unité selon le cycle nominal lorsque le débit requis est égal à un débit nominal ou éventuellement lorsque le débit requis est supérieur au débit nominal,
- faire fonctionner l'unité selon le cycle réduit lorsque le débit requis est inférieur ou égal à un débit prédéterminé, le débit prédéterminé étant inférieur au débit nominal.

Ceci permet d'ajuster la production à la demande (c'est-à-dire le débit requis) de façon particulièrement efficace. En effet, le fait de rallonger le cycle réduit permet selon les cas, d'améliorer le rendement d'extraction ou l'énergie spécifique de production par rapport à une simple réduction du débit de production.

Selon une réalisation, le débit prédéterminé est défini par la relation Drm = Dn × ( Tphn / (Tphn + tjm) ), Drm étant le débit prédéterminé, Dn étant le débit nominal, Tphn étant le temps de phase du cycle nominal pour le débit de production nominale, et tjm la durée minimale de l'étape intermédiaire.

Selon une réalisation, le débit prédéterminé est compris entre 88% et 98% du débit nominal et préférentiellement entre 90% et 95% du débit nominal.

Selon une réalisation, si le débit requis est inférieur ou égal au débit prédéterminé, la durée de l'étape intermédiaire tj est calculée par la formule tj = Tphn × ( Dn / Dr-1 ), Dr étant le débit requis et cette étape intermédiaire est rajoutée systématiquement, tour à tour, sur les P adsorbeurs de l'unité.

Selon une réalisation, si le débit requis est supérieur au débit prédéterminé, la durée minimale de l'étape intermédiaire n'est ajoutée que pendant un cycle complet, tour à tour, sur les P adsorbeurs de l'unité, tous les X cycles, X étant le premier nombre entier supérieur ou égal à (Dn - Drm) / (Dn - Dr), Dr étant le débit requis.

Selon une réalisation, chacun des temps de phase correspondant au cycle nominal est rallongé dans le cycle réduit d'une durée additionnelle, chaque durée additionnelle venant respectivement, selon la phase du cycle dans laquelle se trouvent les adsorbeurs, pour un premier adsorbeur de l'étape intermédiaire, et pour les autres adsorbeurs, soit d'une autre étape intermédiaire, soit d'un allongement d'une étape du cycle nominal, soit d'un temps mort.

Selon une réalisation, le procédé comporte l'étape de :
- faire fonctionner l'unité de façon périodique, selon le cycle nominal et selon le cycle réduit, lorsque le débit requis est compris entre le débit prédéterminé et le débit nominal,
- ou de faire fonctionner l'unité selon le cycle nominal tout en produisant un débit inférieur au débit nominal, lorsque le débit requis est compris entre le débit prédéterminé et le débit nominal.

Selon une réalisation, l'étape intermédiaire et la première étape comportent chacune une dépressurisation à co-courant ou elles comportent chacune une dépressurisation à contre-courant.

Ceci permet de limiter les manœuvres d'ouverture et fermeture des vannes pour en limiter l'entretien. En effet, on pourra alors utiliser la même vanne pour régler les deux flux de dépressurisation avec seulement un ajustement du pourcentage d'ouverture si nécessaire. Selon une variante, l'étape intermédiaire et la deuxième étape comportent chacune une dépressurisation à co-courant ou elles comportent chacune une dépressurisation à contre-courant.

Ceci permet de limiter les manœuvres d'ouverture et fermeture des vannes pour en limiter l'entretien de la même façon que ci-dessus.

Selon une autre variante, l'étape intermédiaire, la première étape et la deuxième étape comportent chacune une dépressurisation à co-courant ou elles comportent chacune une dépressurisation à contre-courant.

Ceci permet de limiter les manœuvres d'ouverture et fermeture des vannes pour en limiter l'entretien.

Selon une autre variante, l'étape intermédiaire et la première étape sont des étapes soit d'élution soit de repressurisation, chacune comportant une admission de gaz à contre-courant.

Selon une autre variante, l'étape intermédiaire et la deuxième étape sont des étapes soit d'élution soit de repressurisation, chacune comportant une admission de gaz à contre-courant.

Selon une autre variante, l'étape intermédiaire, la première étape et la deuxième étape sont des étapes soit d'élution soit de repressurisation, chacune comportant une admission de gaz à contre-courant.

Selon une réalisation, la durée minimale de l'étape intermédiaire est comprise entre 0,5 et 3s. Selon une réalisation, le temps de phase de l'unité est compris entre 5 s et 40 s, préférentiellement entre 10 s et 20 s.

Selon une réalisation, le procédé est mis en œuvre par le dispositif de commande en fonction d'informations fournies par des capteurs de l'unité, notamment de pression, de débits, de composition ou de pureté et de données prédéterminées chargées dans le dispositif de commande, notamment le temps de phase du cycle nominal pour le débit de production nominale, la durée minimale de l'étape intermédiaire, le débit nominal.

Selon une réalisation, le débit requis de l'unité est un débit mesuré ou un point de consigne ou est déterminé à partir de la mesure d'autres paramètres comme la pression dans une canalisation ou la variation de pression d'une capacité.

Selon une réalisation, le procédé est mis en œuvre seulement si la pureté de la production est supérieure à une valeur de pureté prédéterminée.

L'invention concerne en outre une unité de séparation d'un flux gazeux comportant P adsorbeurs, avec P ≥ 2, chacun suivant un cycle d'adsorption de type PSA avec un décalage d'un temps de phase, l'unité comportant un dispositif de commande permettant à l'unité de fournir un débit requis et de fonctionner sélectivement selon un cycle nominal ou selon un cycle réduit, le dispositif de commande étant agencé pour la mise en œuvre du procédé tel que décrit ci-dessus.

Selon une réalisation, l'unité comporte au moins une pompe à vide.

Selon une réalisation, l'unité comporte 2 adsorbeurs.

Selon une réalisation, l'unité met en œuvre cycle de pression comprenant deux temps de phase, un temps de phase étant rallongé dans le cycle réduit, de l'étape intermédiaire et l'autre temps de phase, de l'étape correspondante, de même durée, et consistant à recevoir le gaz issu de l'étape intermédiaire.

Selon une réalisation, l'unité comporte les équipements nécessaires à la mise en œuvre du cycle de pression suivi par chacun des adsorbeurs, notamment au moins une tuyauterie, au moins une robinetterie, au moins un moyen d'instrumentation.

Selon une réalisation, l'unité est destinée à produire un flux enrichi en oxygène à partir d'air atmosphérique, la teneur en oxygène de la production étant préférentiellement comprise entre 88 % et 94 % mole, notamment entre 90 % et 93 % mole.

Selon une réalisation, l'unité est agencée pour produire au moins un gaz enrichi en CO2 et au moins un gaz appauvri en CO2 à partir d'un mélange d'alimentation contenant du CO2.

L'invention sera mieux comprise à la lecture de la description qui suit et à l'examen des figures qui l'accompagne. Ces figures ne sont données qu'à titre illustratif mais nullement limitatif de l'invention.
[Fig. 1] La figure 1 est une représentation schématique d'un cycle nominal d'un PSA selon l'invention ; et
[Fig. 2] La figure 2 est une représentation schématique d'un cycle réduit du PSA de la figure 1. De manière générale, le débit nominal est le débit pris en compte lors du dimensionnement de l'unité. Il s'agit généralement du débit spécifié par l'utilisateur final. On parle aussi de «débit 100% » et il n'est pas toujours possible d'aller au-delà. Néanmoins, cela peut effectivement se faire, par exemple en sacrifiant un peu la pureté de la production.

Le cycle correspondant au débit nominal est le cycle nominal. C'est celui qui permet de produire 100%. Le temps de phase du cycle nominal est appelé « Tphn ».

Le débit requis est le débit que l'unité doit produire à un instant donné afin de satisfaire la demande de l'utilisateur. Le débit requis est inférieur ou égal au débit nominal, car à défaut ceci signifierai que l'utilisateur a mal estimé son besoin.

Afin de rendre opérationnelle une étape du cycle (même un temps mort), il convient de disposer d'une durée minimale prédéterminée. Cette durée minimale prédéterminée est appelée « tjm ». Elle est souvent de l'ordre de 1 à 2 secondes. Cette durée est rendue nécessaire pour manœuvrer une vanne, établir un débit.

On entend par cycle réduit tout cycle comportant une modification par rapport au cycle nominal (durée d'étapes, ajout d'étapes) de façon à adapter l'unité à un débit requis différent du débit nominal.

Lorsque le débit requis est inférieur au débit nominal, une solution connue est d'augmenter le temps de production de sorte que le produit du débit produit par la durée de production, reste constant. Ceci signifie que le volume d'adsorbant traite toujours la même quantité de gaz.

Il est apparu que dans un certain nombre de cycles PSA, il était possible de rallonger le temps de phase en rajoutant au cycle nominal, en certains points, une étape supplémentaire (ou étape intermédiaire), différente de l'étape précédente et de l'étape suivante, qui d'une part ne correspondait donc pas à un simple allongement d'une étape déjà existante, ni d'autre part à un temps mort car comportant un transfert de flux.

On définit ainsi un procédé de réglage d'une unité de séparation d'un flux gazeux comportant P adsorbeurs, avec P ≥ 2, chacun suivant un cycle d'adsorption de type PSA ou VPSA avec un décalage d'un temps de phase.

L'unité comporte un dispositif de commande permettant à l'unité de fournir un débit requis et de fonctionner sélectivement selon un cycle nominal ou selon un cycle réduit.

Le cycle nominal comporte successivement, au moins une première étape et une deuxième étape. Le cycle réduit suit la même succession d'étapes que le cycle nominal, avec insertion d'une étape intermédiaire entre la première étape et la deuxième étape.

L'étape intermédiaire est distincte d'un temps mort et est distincte d'un allongement de la première étape ou d'un allongement de la deuxième étape.

Le procédé selon l'invention est mis en œuvre par l'unité de commande. Le procédé comporte les étapes de :
- faire fonctionner l'unité selon le cycle nominal lorsque le débit requis est égal à un débit nominal ou éventuellement lorsque le débit requis est supérieur au débit nominal,
- faire fonctionner l'unité selon le cycle réduit lorsque le débit requis est inférieur ou égal à un débit prédéterminé, le débit prédéterminé étant inférieur au débit nominal.

L'intérêt d'intégrer au cycle nominal une telle étape intermédiaire, permet d'éviter des mouvements répétés de vannes nuisibles à leur bon fonctionnement et d'effectuer aisément des marches réduites qui seraient délicates à mettre en œuvre en son absence.

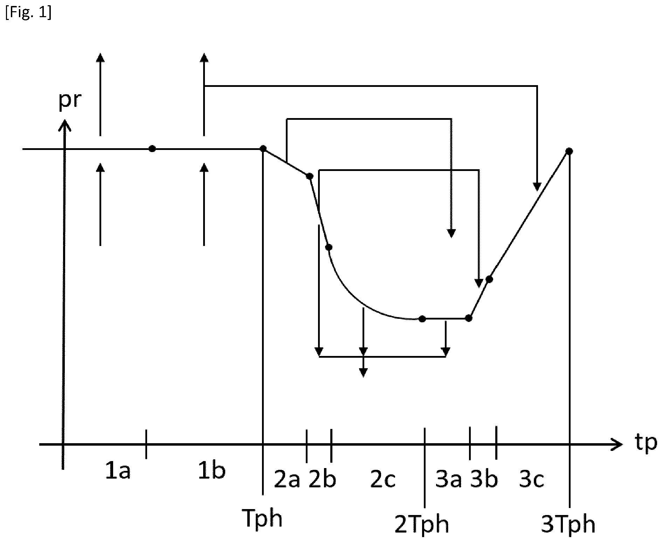

Dans l'exemple de la figure 1, on a illustré un tel cycle nominal d'un PSA, et plus particulièrement un cycle VSA, d'une unité comportant 3 adsorbeurs et donc 3 phases distinctes. Le schéma de la figure 1 représente la pression Pr en fonction du temps tp.

La première phase de production comporte 2 étapes : la, 1b. Pendant l'étape la, l'adsorbeur est alimenté en partie basse par le gaz d'alimentation et fournit à sa partie supérieure le gaz de production alors que pendant l'étape 1b, il fournit en outre le gaz de repressurisation du 3^{ème} adsorbeur. Le temps de phase est de 20 secondes et chacune des étapes 1a,1b dure 10 secondes.

La deuxième phase du cycle comprend 3 étapes :
- une étape 2a, d'une durée de 5 secondes, qui est une dépressurisation à co-courant qui fournit le gaz d'élution au 3^{ème} adsorbeur qui est alors à la basse pression du cycle, par exemple de l'ordre de 0,3 bar abs, obtenu par pompage sous vide;
- une étape 2b, d'une durée de 5 secondes, qui est une dépressurisation simultanée à contre-courant par pompage sous vide et à co-courant pour fournir du gaz de repressurisation au 3^{ème} adsorbeur ;
- une étape 2c, qui est un pompage sous vide jusqu'à la basse pression du cycle d'une durée de 10 secondes.

Le troisième adsorbeur va successivement suivre :
- l'étapes 3a , qui est une étape d'élution d'une durée de 5 secondes ;
- l'étape 3b, qui est une première repressurisation d'une durée de 5 secondes ;
- l'étape 3c, qui est une repressurisation finale d'une durée de 10 secondes.

Comme dans tout cycle PSA, on constate que la durée de chaque phase est identique, ici 20 secondes et que les étapes comportant des échanges de flux directs entre deux adsorbeurs correspondent bien temporellement, c'est-à-dire commençant au même moment dans leur phase respective, et sont de même durée, par exemple la fourniture de gaz d'élution 2a dure 5 secondes et se situe en début de phase de même que l'étape d'élution 3a proprement dite qui reçoit ce gaz et se situe également en début de phase et dure 5s.

Le cycle du PSA étant le cycle prévu lors du dimensionnement ou le cycle réel mis en place lors du démarrage, on appelle ici débit nominal, le débit produit dans ces conditions avec la pureté spécifiée. Si tout était exactement conforme aux calculs, ce débit correspondrait au débit du dimensionnement. En pratique, il peut être un peu supérieur si par exemple la qualité de l'adsorbant est meilleure que prévu ou si la pompe à vide, dans le cas d'un VSA, est un peu plus performante.

On notera qu'avec notre définition, le débit nominal peut évoluer au cours du fonctionnement, par exemple à la baisse s'il y a une pollution de l'adsorbant. Ainsi, le débit nominal qu'on utilise pour déterminer la meilleure marche réduite pourra selon les cas correspondre à la référence 100 du calcul, 106 mesuré au démarrage ou 95 après un an de fonctionnement. Ce type de mesure est normalement fait périodiquement par l'exploitant après avoir mis les autres paramètres en accord avec les données du dimensionnement, car c'est le moyen le plus sûr pour constater l'état de l'unité et suivre son évolution au cours du temps.

On suppose que par la suite l'on n'a besoin que d'environ 90% du débit nominal.

Un premier moyen non représenté ici pourrait être de continuer le même cycle en refermant une vanne de production pour limiter de la sorte le débit produit. Cela conduit généralement à augmenter la pureté de la production mais cela s'accompagne d'un accroissement non négligeable de l'énergie spécifique de production qui pénalise cette solution.

Il est préférable d'augmenter le temps de phase de 10% en maintenant les performances du PSA par temps de cycle. Ainsi, l'objectif sera de traiter la même quantité de gaz d'alimentation, d'extraire la même quantité de résiduaire via la pompe à vide et de produire la même quantité de gaz épuré par cycle de 66 secondes (3 × 22) au lieu de 60 secondes (3 × 20) en marche nominale. On diminue bien ainsi de 10% la production horaire.

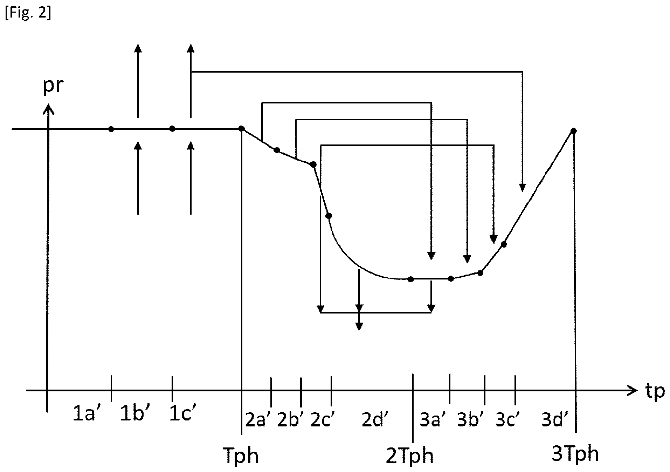

On a représenté sur la figure 2 un exemple d'un cycle réduit du PSA de la figure 1. Le schéma de la figure 2 représente la pression Pr en fonction du temps tp.

Comme visible à la figure 2, le cycle réduit se caractérise par l'ajout au cycle nominal, d'une étape 2b'. Il s'agit, dans cet exemple, d'une étape de dépressurisation à co-courant dont le gaz sert à commencer à repressuriser le troisième adsorbeur. Elle se distingue de l'étape qui la précède 2a' (dont le gaz sert à faire l'élution) et de l'étape qui suit 2c'(pour laquelle la dépressurisation se fait simultanément à contre-courant et à co-courant).

Il s'agit d'une nouvelle étape appelée étape intermédiaire.

On appelle ainsi « étape intermédiaire », toute étape introduite dans le cycle réduit par rapport au cycle nominal, avec les caractéristiques de l'invention (distincte d'un temps mort et distincte d'un allongement de la première étape ou d'un allongement de la deuxième étape).

Cette étape intermédiaire est distincte de ses voisines. Il convient de noter que pour réaliser une marche réduite de ce type, il ne suffit pas de rallonger une seule phase mais ce sont toutes les phases du cycle du PSA qu'il convient de rallonger de la même durée, ici 2 secondes.

Il existe plusieurs manières de rallonger la phase de production. On peut tout simplement la rallonger et diminuer simultanément le débit d'alimentation par action sur le « bipasse » du compresseur. Ainsi on introduit 10% de fluide en moins pendant une durée 10 % supérieure, ce qui fait que l'adsorbant voit la même quantité de gaz par phase d'alimentation.

Dans l'exemple de la figure 2, on décide en outre d'introduire un temps mort de deux secondes en début de la phase de production (étape 1a'), pendant lequel le compresseur (ici, une soufflante) envoie un débit nul vers l'adsorbeur (vanne refoulement fermée par exemple). Dans cet exemple, cette étape 1a' ne doit pas être considérée comme une étape intermédiaire.

Toujours dans l'exemple de la figure 2, la troisième phase comporte une étape intermédiaire 3b' de 2 secondes. Il s'agit bien ici, d'une deuxième étape intermédiaire selon l'invention, car elle est distincte de l'étape qui la précède 3a' (élution) et de l'étape qui la suit 3c' (dont le gaz de repressurisation vient d'un adsorbeur en dépressurisation simultanée à co-courant et contre-courant).

Ainsi, la figure 2 illustre bien un cycle réduit qui est obtenu par l'adjonction au cycle nominal, de deux étapes intermédiaires. Chaque étape intermédiaire est distincte de l'étape qui la précède et de celle qui la suit et n'est pas un temps mort). Chaque étape intermédiaire est sur un temps de phase distinct (le 2ème et le 3^{ème}, dans l'exemple considéré). Dans l'exemple de la figure 2, on ajoute par ailleurs un temps mort sur le dernier temps de phase (le 1^{er} temps de phase, dans l'exemple considéré). On notera que cela aurait été également le cas dans l'hypothèse où l'on aurait introduit qu'une seule étape intermédiaire.

Dans une variante, on utilise dans le cycle nominal, une seule vanne qui permet de contrôler la dépressurisation à co-courant du 2^{ème} adsorbeur. La vanne contrôle à la fois le débit d'élution envoyé vers le troisième adsorbeur (2a - 3a) mais aussi le débit de recompression de ce même troisième adsorbeur (2b - 3b). Le dispositif de commande de l'unité régule l'ouverture de la vanne en fonction des points de consigne qui lui ont été fournis (à priori des pressions intermédiaires du cycle).

Lors de la marche réduite (c'est-à-dire lorsque l'unité fonctionne selon le cycle réduit), c'est la même vanne qui va réguler le débit de première repressurisation de l'adsorbeur 3 (2b' - 3b'). Aucune ouverture/fermeture de vanne n'est nécessaire : on ne rajoute qu'un temps de régulation à la vanne, ce qui est sans incidence sur son fonctionnement.

Comme déjà signalé, un des principaux développements concernant les PSA est l'accélération des cycles, c'est-à-dire en pratique le raccourcissement des phases. Cela permet de produire plus avec un même volume d'adsorbant ou à même production de diminuer le volume nécessaire d'adsorbant à mettre en jeu. Cette démarche conduit souvent à sacrifier un peu l'efficacité de l'unité en terme de rendement ou d'énergie spécifique pour obtenir un gain très substantiel sur la productivité et donc l'investissement. Prenons comme exemple un cycle que l'on a compacté au maximum compte tenu de la cinétique des adsorbants et des possibilités des équipements. Il comporte une phase correspondant à la repressurisation de l'adsorbeur de la basse pression à la haute pression d'adsorption. On dispose d'une pluralité d'étapes pour réaliser cette repressurisation comme par exemple : une élution à pression montante, des repressurisations à contre-courant avec divers flux issus d'autres adsorbeurs (par exemple équilibrages, équilibrages partiels), flux parfois stockés temporairement dans des capacités tampon, avec une fraction de la production, des repressurisations à co-courant avec également divers flux issus d'autres adsorbeurs ou avec le gaz d'alimentation. Certaines de ces repressurisations pourront se faire de façon simultanée à co-courant et contre-courant. Un cycle PSA rapide avec des phases de 10 à 20 secondes n'effectuera pour des raisons pratiques la repressurisation d'un adsorbeur qu'avec un nombre limité d'étapes, souvent de 2 à 4 maximum.

Les étapes retenues seront celles les plus efficaces et qui s'intègrent bien dans le cycle complet du PSA.

Ainsi, un cycle VSA rapide utilisé pour la production d'un flux enrichi en oxygène comporte en marche nominale une repressurisation comprenant une élution à pression montante, un équilibrage à contre-courant par un flux issu d'un autre adsorbeur avec simultanément l'admission d'air atmosphérique à co-courant puis une repressurisation finale à l'air.

On sait que l'introduction d'une ou deux étapes complémentaires permettraient d'améliorer l'efficacité du cycle du VSA mais cela amènerait, au moins avec la technologie utilisée, à rallonger le temps de phase d'environ 1,5 à 3 secondes. Pour un temps de phase initial de 15 secondes, cela reviendrait à perdre automatiquement d'un côté 10 % à 20 % de productivité pour un gain en efficacité du cycle plus faible. Le bilan économique n'est pas en faveur de l'adjonction d'étapes nouvelles. Par contre, on conçoit que si cette même unité ne fonctionne qu'à moins de 90 % ou à moins de 80 % de son débit nominal, on peut profiter de la marge qui en résulte pour introduire une ou deux étapes nouvelles qui amélioreront alors les performances. Cette ou ces nouvelles étapes seront par exemple, une simple repressurisation à contre-courant avec du gaz issu d'un autre adsorbeur placé tout de suite après l'étape d'élution à pression montante et/ou une repressurisation à contre-courant avec une fraction de la production avant la repressurisation finale avec le gaz d'alimentation (cette repressurisation à contre-courant pouvant être en partie au moins simultanée avec l'introduction du gaz d'alimentation).

On profite ainsi d'une marche réduite pour rajouter soit un équilibrage partiel de pression entre adsorbeurs soit une nouvelle étape de recompression. On a indiqué pour ces nouvelles étapes une durée indicative de 1,5 à 2 secondes. La mise en place d'une nouvelle étape dans le cycle va dépendre non seulement de la façon dont elle s'insère dans le cycle (par exemple du nombre de vannes à manœuvrer, des contraintes éventuelles avant les manœuvres), des possibilités du dispositif de commande, du type et de la taille des vannes. Les vitesses maximales de manœuvre des vannes sont généralement indiquées par leur fournisseur. Il en est de même du temps de réponse du dispositif de commande.

Quand une majorité de paramètres est favorable, on peut approcher les 0,5 secondes pour introduire une nouvelle étape. Avec des paramètres moins favorables, ce sera plutôt de l'ordre de 3 à 4 secondes.

Cela signifie qu'on ne pourra mettre en œuvre le procédé qu'à partir d'un certain allongement du cycle et donc à partir d'un certain débit réduit.

Dans une majorité de cycles PSA, en cas de débit requis Dr inférieur au débit nominal Dn, on rallonge le temps de phase du cycle nominal pour le débit de production nominale (c'est-à-dire la durée de la phase d'adsorption nominale) Tphn d'une durée t telle que l'on a la relation : Dr × (Tphn + t) = Dn × Tphn.

Cela revient à dire que l'adsorbeur produit la même quantité de gaz de production au cours d'un cycle et qu'il traite donc également en première approximation la même quantité de gaz d'alimentation.

On obtient immédiatement Dr = Dn × (Tphn / (Tphn + t), qui donne le débit de production en fonction de t. On a d'autre part la relation : t = Tphn × ( (Dn / Dr ) -1), qui donne le temps t correspondant à un débit requis Dr

On notera que de façon plus générale on aurait la relation Dr = f(t) et t=g(Dr), les fonctions f et g pouvant être déterminées à partir d'un certain nombre de simulations ou d'essais. Les fonctions f et g peuvent intégrer éventuellement d'autres paramètres comme la température d'entrée du gaz d'alimentation, une pression du cycle ou même la pureté de la production. Ayant fixé la durée minimale de l'étape intermédiaire tjm en fonction des particularités du cycle PSA comme vu plus haut, on détermine la valeur d'un débit prédéterminé Drm (valeur maximale correspondante du débit produit en cycle réduit) avec la relation Drm = Dn × (Tphn / (Tphn+tjm).

Par exemple pour un temps de phase de 30 secondes et une durée minimale de l'étape intermédiaire de 1.5 secondes, on pourrait mettre en œuvre l'invention de façon systématique, c'est-à-dire successivement à tous les cycles, pour un débit requis inférieur ou égal à 95.2% du débit nominal.

Pour la même unité, on pourrait déterminer l'allongement t de la phase de production pour un débit requis inférieur à 95.2% et par là, la durée de l'étape intermédiaire tj (tj = t). Par exemple pour un débit requis de 88%, on trouve tj= 4.1 secondes.

Pour des débits requis supérieur à 95.2% et inférieurs à 100%, le principe retenu va être d'intercaler un cycle à débit réduit parmi des cycles à 100%. Par exemple, on obtiendrait une production moyenne égale à 97.6% en faisant successivement un cycle nominal et un cycle réduit minimal avec une étape intermédiaire de 1.5 s. Plus précisément dans ce cas, les P adsorbeurs de l'unité feraient successivement un cycle nominal, un cycle réduit, un cycle nominal, etc. La durée d'un cycle étant courte, les faibles variations du débit de production n'ont pas d'impact et sont rapidement amorties à travers les équipements aval.

On peut trouver des algorithmes plus ou moins complexes pour déterminer les séquences optimales mais si le débit requis Dr est supérieur au débit prédéterminé Drm, une solution consiste à ne rajouter l'étape intermédiaire de durée minimale tjm que pendant un cycle complet (tour à tour sur les P adsorbeurs de l'unité), tous les X cycles avec X déterminé par la relation : X = premier nombre entier supérieur ou égal à (Dn-Drm) / (Dn-Dr).

Par exemple pour : Drm = 95.2% et Dn = 100% par définition, on obtient :
- pour Dr = 97.6, le ratio (Dn-Drm) / (Dn-Dr) = 4.8 / 2.4 = 2, d'où X=2, ce qui représente une marche réduite tous les 2 cycles ;
- pour Dr= 98%, le ratio = (Dn-Drm) / (Dn-Dr) = 4.8 / 2 = 2.4 d'où X=3, ce qui représente une marche réduite tous les 3 cycles (soit 1 cycle sur 3).

En pratique la production sera légèrement supérieure et égale à 98.4%.

Un tel écart est à priori sans incidence et se trouve dans l'incertitude de mesure des débitmètres.

Cela peut conduire, par exemple sur un VSA O2 à une augmentation de la pureté de l'oxygène de l'ordre de 0.1 à 0.2% ce qui est de l'ordre des fluctuations naturelles de l'unité. Néanmoins, si cela s'avérait nécessaire, on dispose d'un paramètre de liberté qui consiste à augmenter la durée de l'étape intermédiaire tj au-delà de sa durée minimale tjm, ce qui revient à modifier Drm. On peut alors couvrir la gamme entière des marches réduites.

Par exemple, alors que Dr = 98%, si on veut un ratio égal à 3 pour obtenir précisément X=3, il convient que Drm soit égal à 94% et donc de fixer tjm à 1.9 secondes.

On aura ainsi une succession de cycles avec comme production 100%, 100%, 94%, 100%, 100%, 94%, ...ce qui correspond bien en moyenne à 98%.

On notera que lorsqu'on dispose à l'aval du PSA d'un volume tampon important pour moyenner les fluctuations de débit, on pourra préférer minimiser les passages du cycle nominal au cycle réduit tout en maintenant le ratio entre le nombre de chacun des 2 cycles. L'exemple précédent pourrait conduire alors par exemple à la séquence :
100, 100, 100, 100, 100, 100, 94, 94, 94, 100, 100, ...

De façon plus générale, le dispositif de commande de l'unité fera alors fonctionner le PSA suivant une succession de M cycles nominaux et de N cycles réduits conduisant en moyenne au débit requis.

Le problème de la mise en œuvre des marches réduites sur une unité PSA est d'autant plus critique que les temps de phase sont courts. D'une part le nombre annuel d'ouverture/fermeture de vannes, nécessaire dans une solution classique, est inversement proportionnel à la durée d'une phase et il va en être de même avec la durée entre deux maintenances programmée. Rajouter des manœuvres de vannes ne fait qu'aggraver ce point. D'autre part, la possibilité de déclencher une marche réduite est seulement possible lorsque le débit requis est sensiblement inférieur au débit nominal. L'invention sera donc particulièrement bien adaptée pour des cycles PSA avec des temps de phase de 5 à 40 secondes.

La présence de machines et en particulier de pompes à vide introduit ordinairement des contraintes supplémentaires sur les durées d'étape auxquelles l'invention peut apporter une solution. En effet, pour des machines ne comportant pas de variateur de vitesse, allonger les étapes où elles sont en service va à l'opposé d'une marche réduite. On ne souhaite en effet ni rentrer plus de gaz pendant l'étape de production, ni pousser plus la régénération de l'adsorbant en extrayant plus de résiduaire. Il convient alors de créer des temps morts côté adsorbeur tout en faisant fonctionner les machines en recyclage ou avec une mise à l'air par exemple.

L'invention s'applique particulièrement bien aux VSA ou VPSA O2 dont le cycle comporte à la fois des temps de phase courts, par exemple de 15 à 35 secondes, et des équipements tels que : compresseur d'air ou pompe à vide.

Le procédé selon l'invention peut être entièrement automatisé. Le débit nominal qui, rappelons-le, peut varier au cours du temps en fonction par exemple de l'état de l'adsorbant peut être rentré manuellement dans le système après un essai par exemple, ou déterminé par le système lui-même en fonction des performances réelles à un moment donné et des conditions opératoires correspondantes. Une corrélation par exemple incluant les paramètres principaux (débit de production, pureté, température, temps de phase...) permettra de trouver le débit qu'il sera possible de produire dans les conditions nominales.

La connaissance du débit de production requis est évidemment importante dans le cadre de l'invention. Ce débit peut être déterminé de différentes façons que ce soit un point de consigne provenant de l'unité aval, une mesure directe (débitmètre par exemple) ou indirecte (via des pressions par exemple).

La pureté de la production est évidement une caractéristique primordiale pour la majorité des unités. L'analyse de la pureté du produit peut être introduite de plusieurs manières dans le processus de l'invention. La façon la plus simple consiste à introduire une sécurité. On sait que pour une majorité de procédés PSA, le fait de réduire le débit de production sans toucher au cycle conduit à produire plus pur que nécessaire et ce au détriment du rendement et/ou de l'énergie spécifique, c'est-à-dire en définitive de la consommation de matière première (gaz d'alimentation ou de la consommation énergétique). Afin d'éviter tout risque de passer sous la pureté requise en enclenchant une marche réduite, le système ne passera en mode opérationnel (allongement des temps de phase avec au moins une nouvelle étape) qu'en cas de sur-pureté.

Par exemple, pour un VSA O2 devant fournir du gaz à 90% d'oxygène, la marche réduite ne sera effective que si la pureté en oxygène dépasse 90.5%

La pureté de la production peut également être introduite comme un des paramètres permettant de déterminer la durée adéquate des phases ou le facteur X (on rappelle que 1/X correspond à la fraction de cycle réduit lorsque le débit requis est compris entre le débit réduit prédéterminé et le débit nominal). En reprenant l'exemple d'un VSA O2, on peut connaître par simulations ou essais sur site, la fonction débit production = g(pureté production), le débit de production pouvant être normalisé.

Ainsi, pour une unité devant produire de l'oxygène à 90%, on pourra avoir les couples (débit normalisé, pureté) : (100, 90%), (97, 91.5%), (92, 93%), (87,93.5%), (82,94%).

Si l'unité fonctionne au débit requis avec une pureté de 92%, on pourrait produire environ 4.7% de débit supplémentaire pour une pureté de 90%. Comme on ne désire pas augmenter le débit, on peut allonger le temps de phase en proportion soit pour une durée nominale de 30 secondes, passer à 31.4 secondes. De la sorte on produira le débit requis à la pureté requise. On consommera par cycle la même énergie que précédemment mais faisant alors moins de cycles par heure, la consommation énergétique de l'unité diminuera.

## Revendications

1. Procédé de réglage d'une unité de séparation d'un flux gazeux comportant P adsorbeurs, avec P ≥ 2, chacun suivant un cycle d'adsorption de type PSA avec un décalage d'un temps de phase, l'unité comportant un dispositif de commande permettant à l'unité de fournir un débit requis et de fonctionner sélectivement selon un cycle nominal ou selon un cycle réduit, le cycle nominal comportant successivement, au moins une première étape et une deuxième étape, le cycle réduit, suivant la même succession d'étapes que le cycle nominal, avec insertion d'une étape intermédiaire entre la première étape et la deuxième étape, l'étape intermédiaire étant distincte d'un temps mort et étant distincte d'un allongement de la première étape ou d'un allongement de la deuxième étape, le procédé comportant les étapes de :
- faire fonctionner l'unité selon le cycle nominal lorsque le débit requis est égal à un débit nominal ou éventuellement lorsque le débit requis est supérieur au débit nominal,
- faire fonctionner l'unité selon le cycle réduit lorsque le débit requis est inférieur ou égal à un débit prédéterminé, le débit prédéterminé étant inférieur au débit nominal.

2. Procédé selon la revendication précédente, **caractérisé en ce que** le débit prédéterminé est défini par la relation Drm = Dn × ( Tphn / (Tphn + tjm) ), Drm étant le débit prédéterminé, Dn étant le débit nominal, Tphn étant le temps de phase du cycle nominal pour le débit de production nominale, et tjm la durée minimale de l'étape intermédiaire.

3. Procédé selon l'une des revendications précédentes, le procédé comportant l'étape de :
- faire fonctionner l'unité de façon périodique, selon le cycle nominal et selon le cycle réduit, lorsque le débit requis est compris entre le débit prédéterminé et le débit nominal,
- ou de faire fonctionner l'unité selon le cycle nominal tout en produisant un débit inférieur au débit nominal, lorsque le débit requis est compris entre le débit prédéterminé et le débit nominal.

4. Procédé selon l'une des revendications 1 à 3, **caractérisé en ce que** l'étape intermédiaire et la première étape comportent chacune une dépressurisation à co-courant ou **en ce qu'**elles comportent chacune une dépressurisation à contre-courant.

5. Procédé selon l'une des revendications 1 à 3, **caractérisé en ce que** l'étape intermédiaire et la deuxième étape comportent chacune une dépressurisation à co-courant ou **en ce qu'**elles comportent chacune une dépressurisation à contre-courant.

6. Procédé selon l'une des revendications 1 à 3, **caractérisé en ce que** l'étape intermédiaire, la première étape et la deuxième étape comportent chacune une dépressurisation à co-courant ou **en ce qu'**elles comportent chacune une dépressurisation à contre-courant.

7. Procédé selon l'une des revendications 1 à 3, **caractérisé en ce que** l'étape intermédiaire et la première étape sont des étapes soit d'élution soit de repressurisation, chacune comportant une admission de gaz à contre-courant.

8. Procédé selon l'une des revendications 1 à 3, **caractérisé en ce que** l'étape intermédiaire et la deuxième étape sont des étapes soit d'élution soit de repressurisation, chacune comportant une admission de gaz à contre-courant.

9. Procédé selon l'une des revendications 1 à 3, **caractérisé en ce que** l'étape intermédiaire, la première étape et la deuxième étape sont des étapes soit d'élution soit de repressurisation, chacune comportant une admission de gaz à contre-courant.

10. Unité de séparation d'un flux gazeux comportant P adsorbeurs, avec P ≥ 2, chacun suivant un cycle d'adsorption de type PSA avec un décalage d'un temps de phase, l'unité comportant un dispositif de commande permettant à l'unité de fournir un débit requis et de fonctionner sélectivement selon un cycle nominal ou selon un cycle réduit, le dispositif de commande étant agencé pour la mise en œuvre du procédé selon l'une des revendications précédentes.
